# EUROPÄISCHE PATENTANMELDUNG

(11) **EP 0 900 583 A2**
(43) Veröffentlichungstag der Anmeldung: **10.03.1999**
(21) Anmeldenummer: 98112755.8
(22) Anmeldetag: 09.07.1998
(51) Int. Cl.: B01D 3/06, C13G 1/00

(54) **Verdampfer zum Aufkonzentrieren von Flüssigkeiten**

(30) Priorität: 10.07.1997 DE 19729515
(71) Anmelder: Balcke-Dürr GmbH, 40882 Ratingen (DE)
(72) Erfinder: Niepoth, Klaus, 47495 Rheinberg (DE)
(74) Vertreter: Stenger, Watzke & Ring Patentanwälte

(57) **Zusammenfassung**

Die Erfindung betrifft einen Verdampfer zum Aufkonzentrieren von Flüssigkeiten, insbesondere Zuckersaft bei der Zuckergewinnung, mit einem Verdampfergehäuse (2), in dem eine Heizkammer (3), mindestens eine oberhalb der Heizkammer (3) angeordnete Flüssigkeitsverteileinrichtung (4) sowie eine Entspannungsstation (5) angeordnet sind. Um einen besonders kompakt bauenden Verdampfer (1) ausbilden zu können, wird vorgeschlagen, daß die Entspannungsstation (5) in Aufgaberichtung der Flüssigkeit vor der Flüssigkeitsverteileinrichtung (4) und oberhalb der Heizkammer (3) angeordnet ist.

## Beschreibung

Die Erfindung betrifft einen Verdampfer zum Aufkonzentrieren von Flüssigkeiten, insbesondere Zuckersaft bei der Zuckergewinnung, mit einem Verdampfergehäuse, in dem eine Heizkammer, mindestens eine oberhalb der Heizkammer angeordnete Flüssigkeitsverteileinrichtung sowie eine Entspannungsstation angeordnet sind.

In der Zuckerindustrie wird der Zuckersaft häufig in einer bis zu sechsstufigen Verdampferanlage von einer Verdampferstufe zur anderen aufkonzentriert. Hierbei kommt es vor, daß der aus einer Verdampferstufe austretende Saft ein höheres Druckniveau als der folgende Verdampfer hat. Dies bedeutet, daß sich vor der Verdampfung der Saft entspannen muß, da sich dies sonst störend auf den folgenden Verdampfungsprozeß auswirkt. Wird die sich auf einem höheren Druckniveau befindende Flüssigkeit direkt, d.h. ohne vorhergehende Entspannung auf die oberhalb der Heizkammer angeordnete Flüssigkeitsverteileinrichtung aufgegeben, so zerplatzen die Flüssigkeitstropfen bei der Entspannung und laufen seitlich in die Brüdenkanäle. Hierbei besteht die Gefahr, daß der aufsteigende Brüden, der in diesem Teil des Apparates durch Naturabscheidung von Safttropfen gereinigt wird, sich mit dem aufgespritzten Saft vermischt. Dieses Brüdengemisch kondensiert dann in der nächsten Verdampfungsstufe, was Zuckerbestandteile im Kondensat zur Folge hat, die zu hochbelasteten Abwässern der Zuckerfabrik führen.

Zur Entspannung der sich auf einem höheren Druckniveau befindenden Flüssigkeit sind aus der Praxis zwei Verfahrensvarianten bekannt. Bei der ersten Variante wird die Flüssigkeit vor der Einleitung in den Verdampfer in einen separaten Entspannungsbehälter geleitet. Die Verwendung eines separaten Entspannungsbehälters bedeutet jedoch zusätzliche Apparatekosten und darüber hinaus einen zusätzlichen Platzbedarf, da für jede Verdampferstufe ein solcher zusätzlicher Entspannungsbehälter notwendig ist. Bei einer zweiten aus der Praxis bekannten Entspannungsmethode wird der Saft unterhalb der Heizkammer in das Verdampfergehäuse eingeführt und dort entspannt. Die entspannte Flüssigkeit wird anschließend über eine gesonderte Pumpe vom Behälterboden zur oberhalb der Heizkammer angeordneten Flüssigkeitsaufgabe gefördert. Neben der Anordnung der zusätzlichen Pumpe ist es bei dieser Entspannungsvariante notwendig, daß unterhalb der Heizkammer eine zusätzliche Flüssigkeitsauffangwanne angeordnet ist, um die aufkonzentrierte Flüssigkeit aufzufangen und abzuleiten, da diese ansonsten in die am Behälterboden befindliche entspannte Flüssigkeit gelangen würde. Die Anordnung dieser zusätzlichen Flüssigkeitsauffangwanne zwischen der Heizkammer und dem Boden des Verdampfergehäuses macht eine größere Bauhöhe des Verdampfers notwendig.

Der Erfindung liegt die **Aufgabe** zugrunde, einen Verdampfer der eingangs genannten Art derart auszugestalten, daß die Ausbildung der Entspannungsstation keine zusätzlichen, die Bauhöhe der Verdampferanlage vergrößernden Einbauten erforderlich macht.

Die **Lösung** dieser Aufgabe ist erfindungsgemäß dadurch gekennzeichnet, daß die Entspannungsstation in Aufgaberichtung der Flüssigkeit vor der Flüssigkeitsverteileinrichtung und oberhalb der Heizkammer angeordnet ist. Durch die Verlagerung der Entspannungsstation in den Bereich oberhalb der Flüssigkeitsverteileinrichtung und somit auch oberhalb der Heizkammer ist es überflüssig, die aus dem Stand der Technik bekannten, teuren und viel Platz benötigenden Zusatzeinbauten im Verdampfergehäuse unterhalb der Heizkammer vorzusehen. Bei dem erfindungsgemäß ausgebildeten Verdampfer gelangt die aufzukonzentrierende Flüssigkeit direkt über die Flüssigkeitsaufgabestelle in die Entspannungsstation, von der aus sie die Verteileinrichtung zugeführt wird.

Gemäß einer bevorzugten Ausführungsform der Erfindung besteht die Entspannungsstation aus einem nach oben offenen topfförmigen Umlenktopf, in dem eine Flüssigkeitsaufgabeleitung endet und der von einem nach unten offenen topfförmigen Abdeckschirm mit Abstand zum Umlenktopf übergriffen wird. In der aus den beiden sich einander übergreifenden topfförmigen Bauteilen gebildeten Entspannungsstation entspannt sich die in den Verdampfer eingeleitete Flüssigkeit, ohne daß die Gefahr besteht, daß die bei der Entspannung zerplatzenden Flüssigkeitstropfen in den Brüdenkanal gelangen können.

Um den Austrittsquerschnitt für die Entspannungsbrüden aus dem Umlenktopf zu vergrößern, können im Boden sowie in dem unteren Bereich der Seitenwände des Umlenktopfes Bohrungen ausgebildet sein. Durch diese Teilentspannung über die Bohrungen im Boden des Umlenktopfes reduziert sich darüber hinaus die Brüdengeschwindigkeit im Umlenktopf.

Gemäß einer praktischen Ausführungsform der Erfindung ist die Entspannungsstation so ausgelegt, daß die Brüdengeschwindigkeit ausgehend von der Flüssigkeitsaufgabe über die Umlenkungen im Umlenktopf und am Abdeckschirm fortlaufend abnimmt und bei der letzten Umlenkung unterhalb der Naturabscheidungsgeschwindigkeit liegt. Diese Geschwindigkeitsreduzierung in den einzelnen Abschnitten der Entspannungsstation wird durch Einstellen der Abstände zwischen den Seitenwänden der Flüssigkeitsaufgabeleitung und den Seitenwänden des Umlenktopfes einerseits sowie den Seitenwänden des Umlenktopfes und den Seitenwänden des Abdeckschirmes andererseits erreicht. Die Anordnung der einzelnen Bauteile der Entspannungsstation zueinander ist dabei vorteilhafterweise so zu wählen, daß die Geschwindigkeit der aus der Entspannungsstation austretenden Brüden unterhalb der etwa bei 1,0 m/sek. liegenden Naturabscheidungsgeschwindigkeit liegt, so daß verhindert wird, daß Flüssigkeitstropfen mit den aus der Entspannungsstation austretenden Entspannungsbrüden mitgerissen werden.

Weiterhin wird mit der Erfindung vorgeschlagen, daß an den Seitenwänden des Abdeckschirmes der Entspannungsstation zur Flüssigkeitsverteileinrichtung weisende Ablaufelemente angeordnet sind. Mit diesen Ablaufelementen werden die ablaufenden Safttropfen der Flüssigkeitsverteileinrichtung zugeführt.

Da insbesondere bei der Verwendung von Verdampfern in der Zuckerindustrie die Flüssigkeitsverteileinrichtung durch Schmutz bzw. Beläge verkrusten kann, ist es von Zeit zu Zeit notwendig, die Flüssigkeitsverteileinrichtung durch Rückspülen zu reinigen. Hierzu wird das Flüssigkeitsniveau in dem Verdampfergehäuse so weit angehoben, bis die Heizkammer geflutet ist. Durch den Heizdampf auf der anderen Seite kocht die Flüssigkeit nach oben und bewirkt ein Abreißen der in der Flüssigkeitsverteileinrichtung liegenden Partikel. Um zu verhindern, daß der Austrag der Verunreinigungspartikel durch den nach oben geschlossenen topfförmigen Abdeckschirm der Entspannungsstation behindert wird, wird gemäß einer weiteren Ausführungsform der Erfindung vorgeschlagen, daß der Abdeckschirm zu Reinigungszwecken nach oben vom Umlenktopf abhebbar ist.

Gemäß einer weiteren Ausführungsform der Erfindung wird vorgeschlagen, daß der Abdeckschirm der Entspannungsstation mehrteilig so ausgebildet ist, daß der die Entspannungsstation nach oben verschließende Deckel zu Reinigungszwecken aufklappbar ist.

Weitere Merkmale und Vorteile der Erfindung ergeben sich aus der nachfolgenden Beschreibung der zugehörigen Zeichnung, in der ein Ausführungsbeispiel eines erfindungsgemäß ausgebildeten Verdampfers schematisch dargestellt ist. In der Zeichnung zeigt:
- Fig. 1: einen schematischen Längsschnitt durch einen Verdampfer gemäß dem Stand der Technik;
- Fig. 2: eine der Fig. 1 entsprechende Darstellung eines erfindungsgemäßen Verdampfers,
- Fig. 3: eine vergrößerte schematische Ansicht des ausgestalteten Details III gemäß Fig. 1 mit geschlossenem Abdeckschirm und
- Fig. 4: eine Darstellung gemäß Fig. 3, jedoch mit geöffnetem Abdeckschirm.

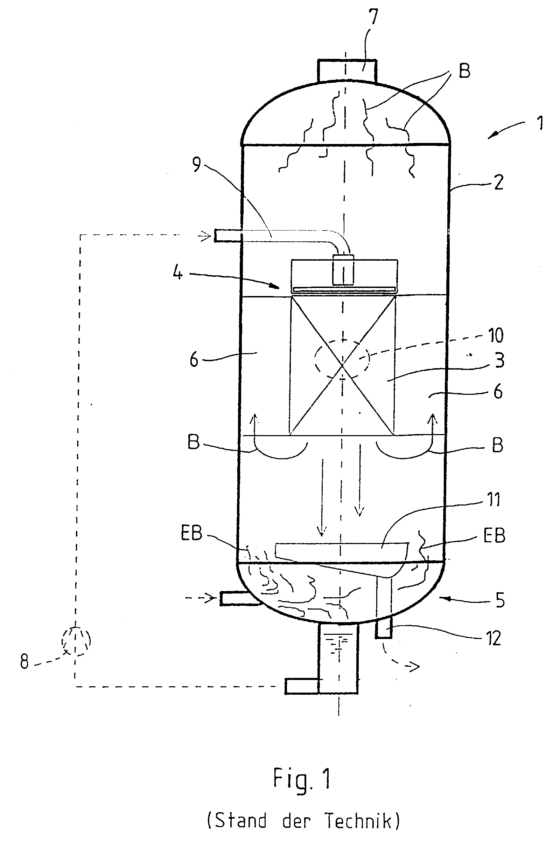

Die den Stand der Technik wiedergebende Fig. 1 zeigt einen Verdampfer 1 mit einem Verdampfergehäuse 2, in dem eine Heizkammer 3, eine oberhalb der Heizkammer 3 angeordnete Flüssigkeitsverteileinrichtung 4 sowie eine Entspannungsstation 5 angeordnet sind. Bei diesem aus dem Stand der Technik bekannten Verdampfer 1 ist die Entspannungsstation 5 am Boden des Verdampfergehäuses 2 angeordnet. Die sich auf einem höheren Druckniveau als der Verdampfer 1 befindende aufzukonzentrierende Flüssigkeit wird am Boden des Verdampfergehäuses 2 in die Entspannungsstation 5 eingeleitet, in der sich die Flüssigkeit ohne Behinderung des im Bereich der Heizkammer 3 stattfindenden Aufkonzentrierungsprozesses entspannen kann. Aus der Entspannungsstation 5 aufsteigende Entspannungsbrüden EB strömen durch seitlich der Heizkammer 3 angeordnete Brüdenkanäle 6 zum am oberen Ende des Verdampfergehäuses 2 angeordneten Brüdenaustritt 7. Die im unteren Teil des Verdampfergehäuses 2 befindliche, aufzukonzentrierende entspannte Flüssigkeit wird über eine externe Pumpe 8 aus dem Verdampfer 1 abgesaugt und über eine Flüssigkeitsaufgabeleitung 9 der oberhalb der Heizkammer 3 angeordneten Flüssigkeitsverteileinrichtung 4 zugeführt. Von dort aus durchströmt die aufgegebene Flüssigkeit die Heizkammer 3 des im dargestellten Ausführungsbeispiel als Platten-Fallfilm-Verdampfer ausgelegten Verdampfers 1. Die Heizkammer 3 wird mit Heizdampf betrieben, der über einen Heizdampfeintritt 10 in die Heizkammer 3 eingeleitet wird. Die während der Aufkonzentration der Flüssigkeit in der Heizkammer 3 austretenden Brüden B werden durch die nachfolgende Flüssigkeit nach unten aus der Heizkammer 3 herausgedrückt, um anschließend über die Brüdenkanäle 6 zum Brüdenaustritt 7 zu strömen. Die in der Heizkammer 3 aufkonzentrierte Flüssigkeit tropft aus der Heizkammer 3 in eine im unteren Bereich des Verdampfergehäuses 2 angeordnete Flüssigkeitsauffangwanne 11, von der aus die aufkonzentrierte Flüssigkeit über einen Flüssigkeitsabzug 12 aus dem Verdampfer 1 entfernt wird.

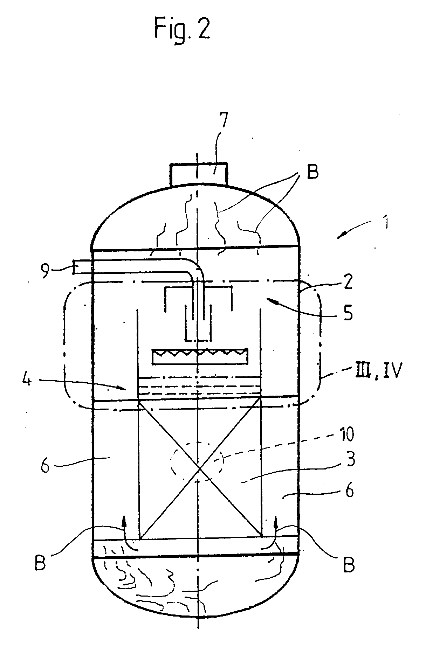

Die Fig. 2 zeigt entsprechend der Darstellung in Fig. 1 einen Verdampfer 1 gemäß der Erfindung, bei dem die grundsätzliche Führung der Flüssigkeit und des Dampfes innerhalb des Verdampfers 1 mit der zum Stand der Technik gehörenden Ausführung gemäß Fig. 1 übereinstimmt. Die Entspannungsstation 5 befindet sich jedoch in Aufgaberichtung der Flüssigkeit vor, d. h. oberhalb der Flüssigkeitsverteileinrichtung und damit der Heizkammer 3.

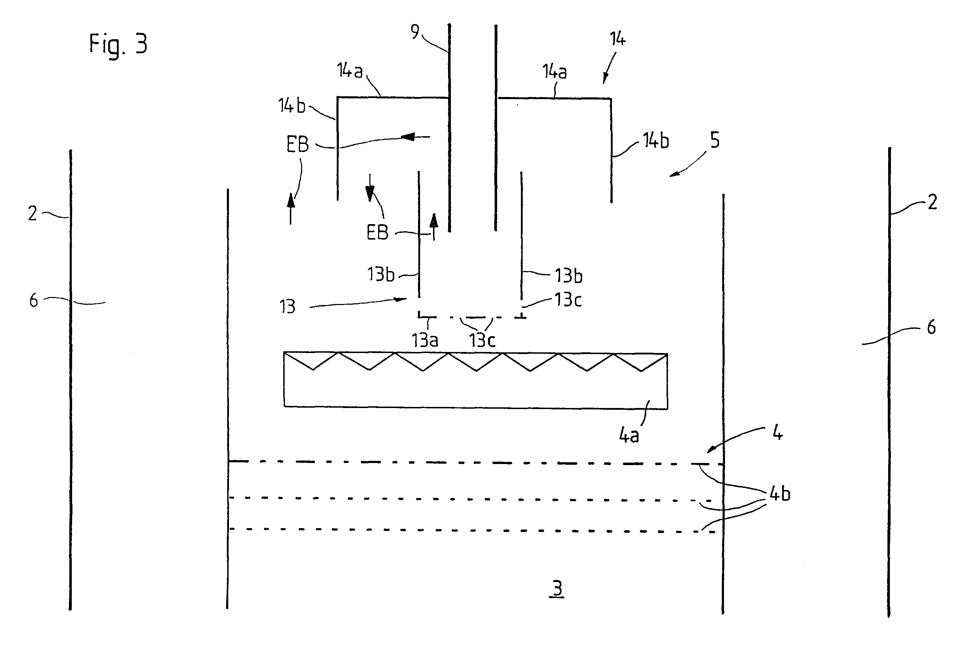

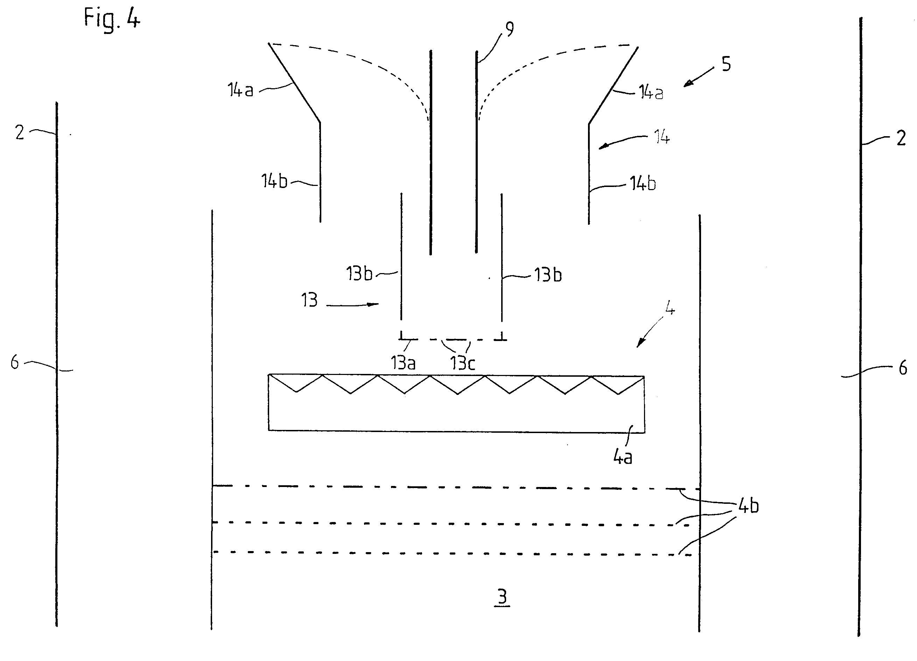

Die Fig. 3 und 4 zeigen vergrößerte Ausschnitte des mit III und IV in Fig. 2 gekennzeichneten Bereichs der Flüssigkeitsaufgabe auf die Flüssigkeitsverteileinrichtung 4. Wie aus diesen Abbildungen ersichtlich, befindet sich - im Gegensatz zum Stand der Technik gemäß Fig. 1 - die Entspannungsstation 5 nunmehr in Aufgaberichtung der Flüssigkeit vor der Flüssigkeitsverteileinrichtung 4 und somit auch oberhalb der Heizkammer 3. Bei einer solchen Anordnung entfällt die zusätzliche Anordnung einer Flüssigkeitsauffangwanne unterhalb der Heizkammer 3 sowie die Verwendung der externen Pumpe 8, die beim Stand der Technik zur Förderung der entspannten Flüssigkeit dient. Es ergibt sich damit eine geringere Bauhöhe des Verdampfers.

Bei der im Bereich der Flüssigkeitsaufgabe ausgebildeten Entspannungsstation 5 besteht die Entspannungsstation 5 aus einem nach oben offenen topfförmigen Umlenktopf 13 und einem den Umlenktopf 13 übergreifenden, nach unten offenen topfförmigen Abdeckschirm 14. Die Flüssigkeitsaufgabeleitung 9 tritt durch einen Deckel 14a des Abdeckschirms 14 hindurch und endet innerhalb des Umlenktopfes 13. Die über die Flüssigkeitsaufgabeleitung 9 in die Entspannungsstation 5 gegebene Flüssigkeit entspannt sich beim Eintreten in den Umlenktopf 13. Die austretenden Entspannungsbrüden EB werden - wie durch die Pfeile in Fig. 3 dargestellt - im Umlenktopf 13 und am Abdeckschirm 14 mehrfach umgelenkt. Hierbei verringert sich bei jeder Umlenkung die Geschwindigkeit der Entspannungsbrüden EB. Die Reduzierung der Geschwindigkeit der Entspannungsbrüden EB kann zusätzlich dadurch verstärkt werden, daß im Boden 13a und im unteren Bereich der Seitenwände 13b des Umlenktopfes 13 Bohrungen 13c ausgebildet sind.

Durch die Variation der räumlichen Anordnung der einzelnen Bauteile der Entspannungsstation 5 zueinander, nämlich des Abstandes der Flüssigkeitsaufgabeleitung 9 zum Boden 13a des Umlenktopfes 13, des Abstandes zwischen der Flüssigkeitsaufgabeleitung 9 und den Seitenwänden 13b des Umlenktopfes 13 sowie des Abstandes des Umlenktopfes 13 zum Abdeckschirm 14 und insbesondere der Seitenwände 13b des Umlenktopfes 13 zu Seitenwänden 14b des Abdeckschirms 14, kann die Geschwindigkeit der Entspannungsbrüden EB innerhalb der Entspannungsstation 5 beeinflußt und eingestellt werden. Um zu verhindern, daß mit den aus der Entspannungsstation 5 austretenden Entspannungsbrüden EB Flüssigkeit mitgerissen wird, ist die Geschwindigkeit der in Richtung der Brüdenkanäle 6 aus der Entspannungsstation 5 austretenden Entspannungsbrüden EB so einzustellen, daß sie unterhalb der Naturabscheidungsgeschwindigkeit von etwas 1,0 m/sek liegt.

Die Abscheidung von in den aus der Entspannungsstation 5 austretenden Entspannungsbrüden EB enthaltenen restlichen Flüssigkeitstropfen kann dadurch erhöht werden, daß an den freien Enden der Seitenwände 14b des Abdeckschirms 14 (nicht dargestellte) zur Flüssigkeitsverteileinrichtung 4 weisende Ablaufelemente angeordnet sind.

Wie aus den Abbildungen Fig. 3 und 4 ersichtlich, besteht die Flüssigkeitsverteileinrichtung 4 aus einem Vorverteiler 4a und darunter angeordneten Lochblechen 4b, über welche die aufzukonzentrierende Flüssigkeit in der Heizkammer 3 verteilt wird.

Da die Flüssigkeitsverteileinrichtung 4 gerade bei der Aufkonzentration von verschmutzten Substanzen enthaltenden Flüssigkeiten, wie beispielsweise der Aufkonzentration von Zuckersaft bei der Zuckergewinnung, dazu neigt, im Laufe des Betriebs durch Verschmutzungen bzw. Beläge zu verkrusten, ist es notwendig, die Flüssigkeitsverteileinrichtung 4 von Zeit zu Zeit durch Rückspülung zu reinigen. Bei der Rückspülung wird das Flüssigkeitsniveau innerhalb des Verdampfergehäuses 2 so weit angehoben, daß die Heizkammer 3 geflutet wird. Durch den in die Heizkammer 3 einströmenden Heizdampf auf der anderen Seite kocht die Flüssigkeit nach oben und bewirkt ein Abreißen der Partikel bzw. Beläge von der Oberfläche der Flüssigkeitsverteileinrichtung 4. Da der nach oben geschlossene Deckel 14a des Abdeckschirms 14 ein Austragen der entfernten Verunreinigungen verhindert oder zumindest behindert, ist der Abdeckschirm 14 vorteilhafterweise mehrteilig so ausgebildet, daß der Deckel 14a zu Reinigungszwecken aufklappbar ist, wie dies in Fig. 3 dargestellt ist. Ebenso ist es möglich, zu Reinigungszwecken den gesamten Abdeckschirm 14 vom Umlenktopf 13 abzuheben.

Ein solchermaßen ausgestalteter Verdampfer 1 zeichnet sich somit dadurch aus, daß aufgrund der Ausbildung der Entspannungsstation 5 oberhalb der Heizkammer 3 nicht nur die Bauhöhe des Verdampfers 1 gegenüber den aus dem Stand der Technik bekannten Verdampfern deutlich reduziert werden kann, sondern daß auch der konstruktive Aufwand insgesamt verringert wird.

### Bezugszeichenliste

- 1: Verdampfer
- 2: Verdampfergehäuse
- 3: Heizkammer
- 4: Flüssigkeitsverteileinrichtung
- 4a: Vorverteiler
- 4b: Lochblech
- 5: Entspannungsstation
- 6: Brüdenkanal
- 7: Brüdenaustritt
- 8: Pumpe
- 9: Flüssigkeitsaufgabeleitung
- 10: Heizdampfeintritt
- 11: Flüssigkeitsauffangwanne
- 12: Flüssigkeitsabzug
- 13: Umlenktopf
- 13a: Boden
- 13b: Seitenwand
- 13c: Bohrung
- 14: Abdeckschirm
- 14a: Deckel
- 14b: Seitenwand
- B: Brüden
- EB: Entspannungsbrüden

## Patentansprüche

1. Verdampfer zum Aufkonzentrieren von Flüssigkeiten, insbesondere Zuckersaft bei der Zuckergewinnung, mit einem Verdampfergehäuse (2), in dem eine Heizkammer (3), mindestens eine oberhalb der Heizkammer (3) angeordnete Flüssigkeitsverteileinrichtung (4) sowie eine Entspannungsstation (5) angeordnet sind,
**dadurch gekennzeichnet**,
daß die Entspannungsstation (5) in Aufgaberichtung der Flüssigkeit vor der Flüssigkeitsverteileinrichtung (4) und oberhalb der Heizkammer (3) angeordnet ist.

2. Verdampfer nach Anspruch 1, dadurch gekennzeichnet, daß die Entspannungsstation (5) aus einem nach oben offenen topfförmigen Umlenktopf (13) besteht, in dem eine Flüssigkeitsaufgabeleitung (9) endet und der von einem nach unten offenen topfförmigen Abdeckschirm (14) mit Abstand zum Umlenktopf (13) übergriffen wird.

3. Verdampfer nach Anspruch 2, dadurch gekennzeichnet, daß im Boden (13a) sowie im unteren Bereich der Seitenwände (13b) des Umlenktopfes (13) Bohrungen (13c) ausgebildet sind.

4. Verdampfer nach Anspruch 2 oder 3, dadurch gekennzeichnet, daß die Entspannungsstation (5) so ausgelegt ist, daß die Geschwindigkeit der Entspannungsbrüden (EB) ausgehend von der Flüssigkeitsaufgabe über die Umlenkungen im Umlenktopf (13) und am Abdeckschirm (14) fortlaufend abnimmt und bei der letzten Umlenkung unterhalb der Naturabscheidungsgeschwindigkeit liegt.

5. Verdampfer nach mindestens einem der Ansprüche 2 bis 4, dadurch gekennzeichnet, daß an den Seitenwänden des Abdeckschirms (14) zur Flüssigkeitsverteileinrichtung (4) weisende Ablaufelemente angeordnet sind.

6. Verdampfer nach mindestens einem der Ansprüche 2 bis 5, dadurch gekennzeichnet, daß der Abdeckschirm (14) zu Reinigungszwecken nach oben vom Umlenktopf (13) abhebbar ist.

7. Verdampfer nach mindestens einem der Ansprüche 2 bis 6, dadurch gekennzeichnet, daß der Abdeckschirm (14) mehrteilig so ausgebildet ist, daß der Deckel (14a) zu Reinigungszwecken aufklappbar ist.
